# EUROPEAN PATENT APPLICATION

(11) **EP 4 167 504 A1**
(43) Date of publication of application: **19.04.2023**
(21) Application number: 21821635.6
(22) Date of filing: 23.03.2021
(51) Int. Cl.: H04J 3/06, H04W 72/12, H04W 74/00

(54) **INFORMATION TRANSMISSION METHOD AND APPARATUS, AND DEVICE AND STORAGE MEDIUM**

(30) Priority: 10.06.2020 CN 202010524500
(71) Applicant: ZTE Corporation, Shenzhen, Guangdong 518057 (CN)
(72) Inventor: WEI, Hao, Shenzhen, Guangdong 518057 (CN); MAO, Huanhuan, Shenzhen, Guangdong 518057 (CN); MOU, Haining, Shenzhen, Guangdong 518057 (CN); LI, Jie, Shenzhen, Guangdong 518057 (CN)
(74) Representative: Aipex B.V.
(86) International application number: PCT/CN2021/082474
(87) International publication number: WO 2021/248975

(57) **Abstract**

Provided are an information transmission method and apparatus, a device, and a storage medium. The information transmission method includes sending a synchronization broadcast signal to a client, where the synchronization broadcast signal includes timestamp information and PUSCH time window position information; and receiving, according to the PUSCH time window position information, a PUSCH signal from the client.

## Description

### TECHNICAL FIELD

The present application relates to the field of wireless communication technology, for example, an information transmission method, apparatus, and a device and a storage medium.

### BACKGROUND

In the 4-step random access channel (RACH), the base station acquires timing advance (TA) by detecting a physical random access channel preamble (PRACH preamble) signal sent by the user equipment (UE). The base station notifies the UE of a receiving time window of the base station through the random access response (RAR), and the UE causes a physical uplink shared channel (PUSCH) signal to fall within the receiving time window of the base station during subsequent information transmission. However, when the multi-user accesses and sends data as short packet data, the use of the original 4-step RACH method results in a large data communication overhead and reduces data transmission efficiency. For a scene of 2-step RACH, since the UE continuously sends the PRACH signal and the PUSCH signal, the conventional method in the 4-step RACH cannot be applied in the scene of 2-step RACH, and according to the TA of message A (MsgA) PUSCH, the UE cannot adaptively adjust the time interval between the PUSCH signal and the PUSCH signal and the sending time of the PUSCH signal. Because the TAs of different users are different, one time window of the base station cannot accommodate all the users, resulting in the user signal being out of the window and the base station performance being reduced. A common method in the art is that a base station accommodates signals of a plurality of users by using a plurality of time windows. However, because the number of time windows is relative large, a determination manner of a time interval between different time windows is complicated, and user signals between different time windows have interference, and the interference still has an influence on the performance of the base station.

### SUMMARY

The present application provides an information transmission method, apparatus, and a device, and a storage medium to achieve transmission of a PUSCH signal, prevent the PUSCH signal from exceeding a time window range, and ensure transmission efficiency of the PUSCH signal.

An information transmission method is provided and applied to a receiving terminal, and the method includes: sending a synchronization broadcast signal to a client, where the synchronization broadcast signal includes timestamp information and PUSCH time window position information; and receiving, according to the PUSCH time window position information, a PUSCH signal from the client.

An information transmission method is further provided and applied to a client, and the method includes: acquiring a synchronization broadcast signal from a receiving terminal, where the synchronization broadcast signal includes timestamp information and PUSCH time window position information; determining a transmission delay according to the timestamp information, and determining sending time of a PUSCH signal according to the transmission delay and the PUSCH time window position information; and sending the PUSCH signal to the receiving terminal according to the sending time.

An information transmission apparatus is further provided and applied to a receiving terminal, and the apparatus includes: a signal broadcast module, which is configured to send a synchronization broadcast signal to a client, where the synchronization broadcast signal includes timestamp information and PUSCH time window position information; and a signal receiving module, which is configured to receive, according to the PUSCH time window position information, a PUSCH signal from the client.

An information transmission apparatus is further provided and applied to a receiving terminal, and the apparatus includes: a broadcast receiving module, which is configured to acquire a synchronization broadcast signal from a receiving terminal, where the synchronization broadcast signal includes timestamp information and PUSCH time window position information; a time determination module, which is configured to determine a transmission delay according to the timestamp information, and determine sending time of a PUSCH signal according to the transmission delay and the PUSCH time window position information; and a signal sending module, which is configured to send the PUSCH signal to the receiving terminal according to the sending time.

A device is further provided. The device includes one or more processors and a memory.

The memory is configured to store one or more programs. When executed by the one or more processors, the one or more programs cause the one or more processors to perform the preceding information transmission method.

A computer-readable storage medium is further provided, which is configured to store a computer program for executing the preceding information transmission method when executed by a processor.

### BRIEF DESCRIPTION OF DRAWINGS

FIG. 1 is a flowchart of an information transmission method according to an embodiment of the present application;
FIG. 2 is a flowchart of another information transmission method according to an embodiment of the present application;
FIG. 3 is a flowchart of another information transmission method according to an embodiment of the present application;
FIG. 4 is a flowchart of another information transmission method according to an embodiment of the present application;
FIG. 5 is an example diagram of another information transmission method according to an embodiment of the present application;
FIG. 6 is a structural diagram of an information transmission apparatus according to an embodiment of the present application;
FIG. 7 is a structural diagram of another information transmission apparatus according to an embodiment of the present application; and
FIG. 8 is a structural diagram of a device according to an embodiment of the present application.

### DETAILED DESCRIPTION

Embodiments of the present application are described below in conjunction with drawings.

The embodiments of the present application are intended to implement the PUSCH signal uploading of the multi-user in the 2-step RACH scene, solve the problem that the PUSCH signal of the user exceeds the time window, reduce the determination complexity of the time window, and improve the performance of the base station. Since the base station and the user terminal have uniform timing, the PUSCH time window position of the base station can be broadcast so that the user adaptively adjusts the time interval between the PRACH signal and the PUSCH signal and the sending time of the PUSCH signal according to the received time window position, thereby controlling the PUSCH signals of the plurality of users to fall within the receiving time window of the base station.

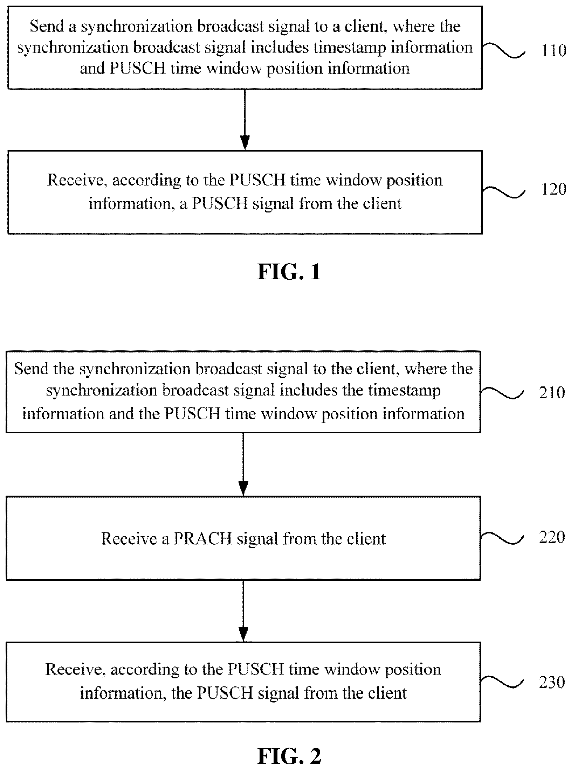

FIG. 1 is a flowchart of an information transmission method according to an embodiment of the present application. The embodiment of the present application is applied to a case where the PUSCH signal is transmitted between the base station and a client, and the method can be performed by an information transmission apparatus, which can be implemented in software and/or hardware and is generally integrated in a receiving terminal. The receiving terminal includes the base station, and referring to FIG. 1, the information transmission method provided by the embodiment of the present application includes the following.

In 110, a synchronization broadcast signal is sent to a client, where the synchronization broadcast signal includes timestamp information and PUSCH time window position information.

The synchronization broadcast signal is a signal for synchronizing time window information between the receiving terminal and the client. The synchronization broadcast signal may be broadcast by the base station to one or more clients. The synchronization broadcast signal may carry the timestamp information and the PUSCH time window position information. The timestamp information may mark the sending time of the synchronization broadcast signal. The timestamp information may be used for determining the transmission delay between the receiving terminal and the clients to improve the accuracy of the time window. For example, the higher the accuracy of the timestamp information, the higher the accuracy of the determined transmission delay between the receiving terminal and the clients, and the client may send the PUSCH signal within the accurate time window. The PUSCH time window position may be the time window position of which the receiving terminal receives the PUSCH signal, and the time window may be the time range of which the receiving terminal receives the PUSCH signal.

The receiving terminal may send the synchronization broadcast signal to the client, where the number of clients may be one or more, and the sent synchronization broadcast signal may include the time window position information and the timestamp information of which the receiving terminal receives the PUSCH signal.

In 120, the PUSCH signal is received from the client according to the PUSCH time window position information.

In the embodiment of the present application, the receiving terminal may receive the PUSCH signal at the PUSCH time window position, the PUSCH time window position may include on-time of the time window and the duration time of the time window, and the receiving terminal may start acquiring the PUSCH signal at a time corresponding to the on-time and maintain a period of time to receive the PUSCH signal, and the period of time may be the duration time of the PUSCH time window position.

In the embodiment of the present application, the synchronization broadcast signal is broadcast to the client, where the synchronization broadcast signal includes the timestamp information and the PUSCH time window position information, and the PUSCH signal is received on the time window corresponding to the PUSCH time window position information. The transmission of the PUSCH signal of the client is achieved by broadcasting the time window position information, so that the PUSCH signal of the client is prevented from leaving the window, the signal receiving performance of the receiving terminal is ensured, the time accuracy between the receiving terminal and the client is improved based on the timestamp information, and the accuracy of the transmission of the PUSCH signal is improved.

In the embodiment of the present application, a synchronization broadcast signal carrying the timestamp information and the PUSCH time window position information is sent to the client, and the PUSCH signal is received from the client according to the PUSCH time window, the accuracy of the PUSCH signal sent by the client is improved through the time window position information and the timestamp information, sending the PUSCH signal is prevented from exceeding the range of the time window, and the transmission performance of the base station is improved.

FIG. 2 is a flowchart of another information transmission method according to an embodiment of the present application. The embodiment of the present application is described based on the preceding embodiment. Referring to FIG. 2, the information transmission method provided in the embodiment of the present application includes the following.

In 210, a synchronization broadcast signal is sent to a client, where the synchronization broadcast signal includes timestamp information and PUSCH time window position information.

On the basis of the preceding embodiment of the present application, the timestamp information is sending time of the synchronous broadcast signal.

In the embodiment of the present application, the receiving terminal may acquire the timestamp information corresponding to the sending time in a case of sending the synchronization broadcast signal, where the timestamp information may refer to the total number of seconds of the transmission time from the Greenwich Mean Time of January 1, 1970 to 00: 00: 00. The higher the accuracy of the timestamp information, the more accurate the receiving terminal receives the time window of the PUSCH signal.

In 220, the PRACH signal is received from the client.

The PRACH signal may determine configuration information such as a preamble format, a time resource, and a frequency resource before the random access process, and may facilitate receiving the PUSCH signal in the random access process.

In the embodiment of the present application, the receiving terminal may detect the PRACH signal sent by the client and judge whether the PRACH signal is received. When the receiving terminal detects the PRACH signal, the receiving terminal may receive the PUSCH signal at a time corresponding to the PUSCH time window position information.

In 230, the PUSCH signal is received from the client according to the PUSCH time window position information.

In the embodiment of the present application, the synchronization broadcast signal carrying the PUSCH time window position information and the timestamp information is sent to the client through the receiving terminal, the PRACH signal sent by the client is detected, it is determined that the PRACH signal exists, the PUSCH signal can be received according to the configuration information of the PRACH signal, and the client receives the PUSCH signal of the client within the time corresponding to the PUSCH time window position information, thereby implementing accurate transmission of the PUSCH signal, preventing the PUSCH signal sent by the client from exceeding the time window range of the receiving terminal, reducing signal interference between different time windows, and improving the parsing performance of the PUSCH signal of the system.

On the basic of the preceding embodiment of the present application, the PUSCH time window position information includes time window start time and time window duration time.

The position of PUSCH time window may be represented by the time window start time and time window duration time, where the time window start time may be the start time at which the receiving terminal starts to receive the PUSCH signal, and the time window duration time may be the duration of time window, the receiving terminal may be continuously receive the PUSCH signal for a period of time after the time window start time, and the period of time may be the time window duration time. The PUSCH time window position information may also be represented by the time window start time and the time window end time, and the receiving terminal may receive the PUSCH signal within a time period corresponding to the time window start time and the time window end time.

On the basis of the preceding embodiment of the present application, the PUSCH time window position information in the synchronization broadcast signal includes position information of at least one PUSCH time window.

In the embodiment of the present application, the synchronization broadcast signal may carry the position information of one or more PUSCH time windows. When the synchronization broadcast signal carries the position information of a plurality of PUSCH time windows, the receiving terminal may turn on the corresponding time window to receive the PUSCH signal in sequence according to the position information of the plurality of PUSCH time windows.

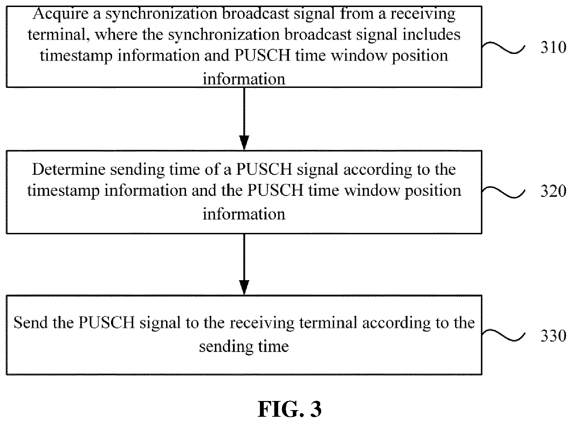

FIG. 3 is a flowchart of another information transmission method according to an embodiment of the present application. The embodiment of the present application is applied to a case where the PUSCH signal is transmitted between the base station and a client, and the method can be performed by an information transmission apparatus, which can be implemented in software and/or hardware and is generally integrated in a client. Referring to FIG. 3, the information transmission method provided by the embodiment of the present application includes the following.

In 310, a synchronization broadcast signal is acquired from the receiving terminal, where the synchronization broadcast signal includes timestamp information and PUSCH time window position information.

The client may acquire the synchronization broadcast signal, and may extract the timestamp information and the PUSCH time window information in the synchronization broadcast signal.

On the basis of the preceding embodiment of the present application, the timestamp information is sending time of the synchronous broadcast signal.

In 320, a transmission delay is determined according to the timestamp information, and sending time of a PUSCH signal is determined according to the transmission delay and the PUSCH time window position information.

In the embodiment of the present application, the timestamp information may be the sending time of the synchronous broadcast signal at the receiving terminal, and the transmission delay between the receiving terminal and the client may be determined through the receiving time of the synchronous broadcast signal and the sending time. Since there is a transmission delay between the receiving terminal and the client, in order for the PUSCH signal sent by the client to fall within the time window in a case of reaching the receiving terminal, the sending time of the PUSCH signal must satisfies a time range whose start point is earlier than the start time of the PUSCH time window, and whose end point is also earlier than the end time of the PUSCH time window. The time range corresponding to the PUSCH signal may be determined through the difference value between the PUSCH time window position information and the transmission delay. When the sending time of the PUSCH signal satisfies a time range, all symbols of the PUSCH signal may fall just within the time window of receiving terminal.

In 330, the PUSCH signal is sent to the receiving terminal according to the sending time.

The client sends the PUSCH signal according to the sending time, so that the PUSCH signal may fall within the range of the PUSCH time window of the receiving terminal.

In the embodiment of the present application, a synchronization broadcast signal carrying the timestamp information and the PUSCH time window position information is sent, the sending time of the PUSCH signal is determined according to the timestamp information and the PUSCH time window position information, and the PUSCH signal is sent according to the sending time, so that accurate uploading of PUSCH signal is achieved, the PUSCH signal sent by the client falls within the time window of the receiving terminal, the signal interference between different time windows is avoided, and the parsing efficiency of PUSCH signal is improved.

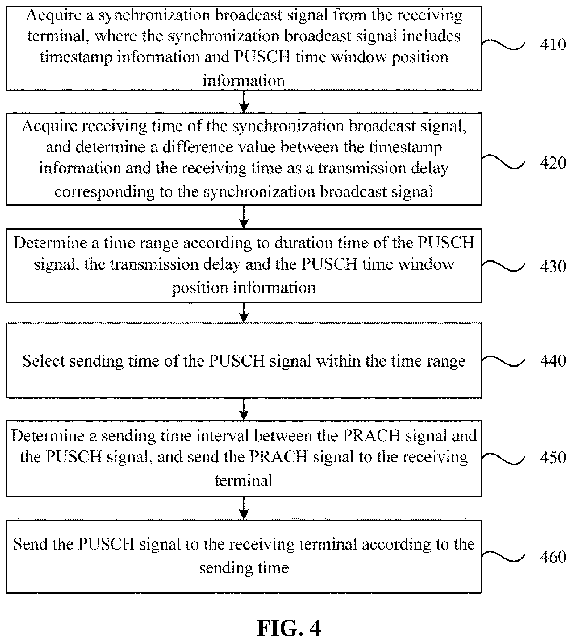

FIG. 4 is a flowchart of another information transmission method according to an embodiment of the present application. The embodiment of the present application is described based on the preceding embodiment. According to the duration time of the PUSCH signal, the sending time accuracy of the client is improved, the client adjusts the sending time interval between the PUSCH signal and the PRACH signal based on the calculated sending time of the PUSCH signal. Referring to FIG. 4, the information transmission method provided in the embodiment of the present application includes the following.

In 410, a synchronization broadcast signal is acquired from the receiving terminal, where the synchronization broadcast signal includes timestamp information and PUSCH time window position information.

In 420, receiving time of the synchronization broadcast signal is acquired, and a difference value between the timestamp information and the receiving time is determined as a transmission delay corresponding to the synchronization broadcast signal.

In 430, a time range is determined according to duration time of the PUSCH signal, the transmission delay, and the PUSCH time window position information.

The time range may be a time range in which the receiving terminal causes the PUSCH signal to fall within the PUSCH time window of the receiving terminal.

In the embodiment of the present application, the PUSCH signal is composed of a plurality of symbols, and sending the PUSCH signal may be continued for a period of time. Therefore, the time range of which the PUSCH signal is sent can be determined according to the duration time of the PUSCH signal, the transmission delay and the PUSCH time window, so that both the first symbol and the last symbol of the PUSCH signal fall within the PUSCH time window range.

On the basic of preceding embodiment of the present application, the time range is sending time of a start symbol in the PUSCH signal, time window start time, time window duration time, the transmission delay, and the duration time of the PUSCH signal.

In 440, sending time of the PUSCH signal within the time range is selected.

The client sends the PUSCH signal according to the time point corresponding to the time range, so that all symbols of the PUSCH signal fall within the time window of the receiving terminal. Therefore, one time point can be randomly selected within the time range as the sending time of the PUSCH signal.

The manner in which the sending time of the PUSCH signal is selected within the time range is not unique, and any time point between the start time point, or the end time point, or the start time point to the end time point of the time range may be selected as the sending time.

In 450, a sending time interval between the PRACH signal and the PUSCH signal is determined, and the PRACH signal is sent to the receiving terminal.

In the embodiment of the present application, there is the sending time interval between the sending time of the PRACH signal in the RACH and the sending time of the PUSCH signal in the RACH, and the sending time interval between the PRACH signal and the PUSCH signal can be determined, and there is no limitation on sending the PRACH signal. The client can determine the sending time of the PRACH signal through the determined the sending time interval, the PRACH signal is sent before the PUSCH signal, and the sending time interval can be determined through the difference value between the sending time of the last symbol of the PRACH signal and the sending time of the first symbol of the PUSCH signal.

After the sending time interval between the transmitted PRACH signal and the transmitted PUSCH signal is determined, the sending time of the PRACH signal is determined based on the sending time of the PUSCH signal and the sending time interval, and the client can send the PRACH signal according to the sending time of the PRACH signal.

In 460, the PUSCH signal is sent to the receiving terminal according to the sending time of the PUSCH signal.

In the embodiment of the present application, the client estimates the transmission delay according to the timestamp information and the receiving time sent by the receiving terminal, and adaptively adjusts the sending time interval between the PRACH signal and PUSCH signal, the sending time of the PRACH and the sending time of PUSCH signal according to the predetermined PUSCH receiving time window position of the receiving terminal, so that the PUSCH signal falls within the receiving time window of the receiving terminal, thereby reducing the user signal interference between the time windows, and improving the parsing performance of the PUSCH signal.

On the basic of the preceding embodiment of the present application, the PUSCH time window position information includes time window start time and time window duration time.

In an exemplarily implementation, the PUSCH time window position information in the synchronization broadcast signal includes position information of at least one PUSCH time window.

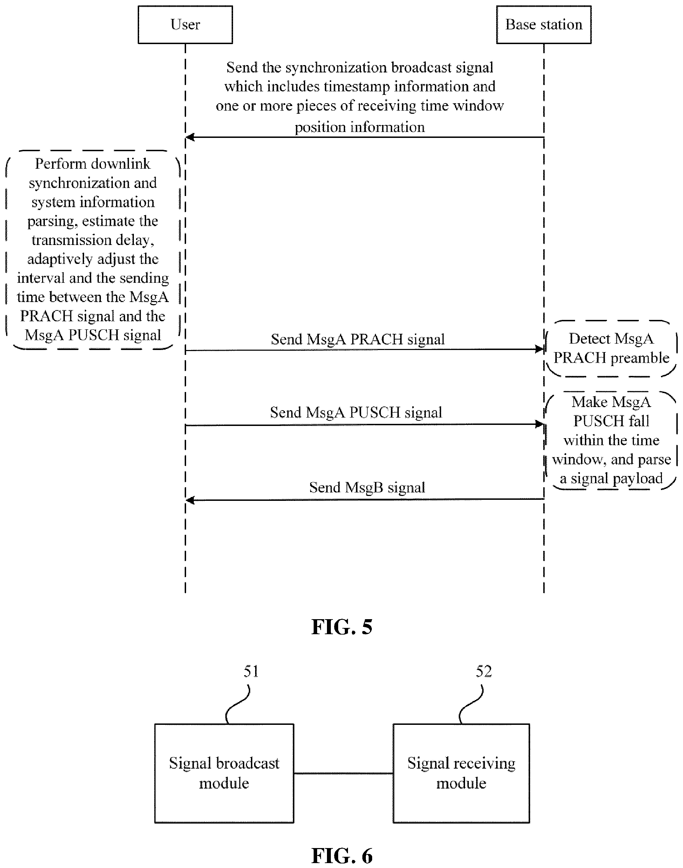

In an exemplarily implementation, FIG. 5 is an example diagram of another information transmission method according to an embodiment of the present application. Referring to FIG. 5, taking the 2-step RACH between a base station and a user as an example, when a synchronization broadcast signal includes time window position information of one PUSCH signal, the information transmission method provided by the embodiment of the present application includes the following.

Step one: The base station sends the synchronization broadcast signal, where the synchronization broadcast signal includes timestamp information, a receiving time window position of one subsequent predetermined PUSCH signal, a start time of the time window, and duration time of the time window.

Step two: The user receives the synchronization broadcast signal, performs downlink synchronization, and performs system information analysis at the same time. The transmission delay Δ*T_{d}* = *t_{UE}*-*t_{BS}* is estimated according to a timestamp mark *t_{BS}* sent by the base station and timing *t_{UE}* of the user. Assuming that the send moment of the MsgA PRACH signal is *t*_{PRACH}, the signal duration time is *T*_{PRACH}, the send moment of the MsgAPUSCH signal is *t*_{PUSCH}, and the signal duration time is *T*_{PUSCH}, the user adaptively adjusts the sending time *t*_{PUSCH}, of the MsgA PUSCH signal, so that the sending time satisfies *t_{w}* ≤ *t*_{PUSCH} + Δ*T_{d}* ≤ *t_{w}* + *T_{w}*-*T*_{PUSCH}, at the same time, the interval time between the MsgA PRACH signal and the MsgA PUSCH signal is adjusted to be Δ*T*_{MsgA} - *t*_{PUSCH}, - (*t*_{PRACH} + *T*_{PRACH}), where the MsgA signal may include PRACH signals and PUSCH signals, the MsgA PRACH signal may be the PRACH signals in the MsgA signal for transmitting configuration information such as preambles, and the MsgAPUSCH signal may be the PUSCH signals in the MsgA for transmitting uplink data.

Step three: The base station detects the MsgA PRACH preamble, receives the MsgA PUSCH signal at the preset time window start time, and parses a payload of the PUSCH signal. The user adaptively adjusts the sending time, so that the MsgA PUSCH signal falls within the receiving time window of the base station. The base station may send the MsgB signal to the user according to the parsed content.

Taking the 2-step RACH between the base station and the user as an example, when the time window position information of two PUSCH signals is included in the synchronous broadcast signal, the information transmission method provided by the embodiment of the present application includes the following.

Step one: The base station sends the synchronization broadcast signal, where the synchronization broadcast signal includes timestamp information, and receiving time window positions of two subsequent predetermined PUSCH signals, start time of the two time windows are respectively *t*_{*w,*1} and *t*_{*w,*2}*, t*_{*w,*1} *t_{w}* ≤ *t*_{*w*,2}*,* and duration time of the two time windows both are *T_{w}*.

Step two: The user receives the synchronization broadcast signal, performs downlink synchronization, and performs system information analysis at the same time. The transmission delay Δ*T_{d}*=*t_{UE}*-*t_{BS}* is estimated according to the timestamp information *t_{BS}* sent by the base station and timing *t_{UE}* of the user. Assuming that the send moment of the MsgA PRACH signal is *t*_{PRACH}, the signal duration time is *T*_{PRACH}, the send moment of the MsgA PUSCH signal is *t*_{PUSCH}, and the signal duration time is *T*_{PUSCH}, when the user adaptively adjusts the sending time of the MsgA PUSCH signal, it is found that the sending time cannot satisfy *t*_{*w,*1}≤*t*_{PUSCH}, + Δ*T_{d}* ≤ *t*_{*w,*1} + *T_{w}* - *T*_{PUSCH}, but can satisfy *t*_{*w,*2} ≤ *t*_{PUSCH}, + Δ*T_{d}* ≤ *t*_{*w,*2} + *T_{w}* - *T*_{PUSCH}, therefore, the signal sending time and interval of the user are adaptively adjusted based on the second receiving time window of the base station, and the interval time between the MsgA PRACH signal and the MsgA PUSCH signal is correspondingly adjusted to be Δ*T*_{MsgA} = *t*_{PUSCH}, - (*t*_{PRACH} + *T*_{PRACH}).

Step three: The base station detects the MsgA PRACH preamble, receives the MsgA PUSCH signal and at which the preset time window start time is within the first time window, and parses a payload of the signal at which the time window start time is within the second time window. Since the user is adaptively adjusted based on the second time window, the base station cannot correctly parse the signal of the user within the first time window, and can correctly parse the signal of the user within the second time window simultaneously. Thereafter, the base station sends the MsgB signal to the user according to the parsed content.

FIG. 6 is a structural diagram of an information transmission apparatus according to an embodiment of the present application. The information transmission apparatus may perform the information transmission method according to any embodiment of the present application and may specifically execute the corresponding functional modules and effects of the method. The apparatus may be implemented by software and/or hardware, is generally integrated in a receiving terminal, and includes a signal broadcast module 51, and a signal receiving module 52.

The signal broadcast module 51 is configured to send a synchronization broadcast signal to a client, where the synchronization broadcast signal includes timestamp information and PUSCH time window position information; and the signal receiving module 52 is configured to receive, according to the PUSCH time window position information, a PUSCH signal from the client.

In the embodiment of the present application, the signal broadcast module broadcasts the synchronization broadcast signal to the client, where the synchronization broadcast signal includes the timestamp information and the PUSCH time window position information, and the signal receiving module receives the PUSCH signal in the time window corresponding to the PUSCH time window position information. The transmission of the PUSCH signal of the client is achieved by broadcasting the time window position information, so that the PUSCH signal of the client is prevented from leaving the window, the signal receiving performance of the receiving terminal is ensured, the time accuracy between the receiving terminal and the client is improved based on the timestamp information, and the accuracy of the transmission of the PUSCH signal is improved.

On the basis of the preceding embodiment of the present application, the apparatus further includes a signal detection module.

The signal detection module is configured to receive the PRACH signal from the client.

On the basis of the preceding embodiment of the present application, the timestamp information in the signal broadcast module 51 is sending time of the synchronous broadcast signal.

On the basic of the preceding embodiment of the present application, the PUSCH time window position information in the signal broadcast module 51 includes time window start time and time window duration time.

On the basis of the preceding embodiment of the present application, the PUSCH time window position information of the synchronous broadcast signal in the signal broadcast module 51 includes position information of at least one PUSCH time window.

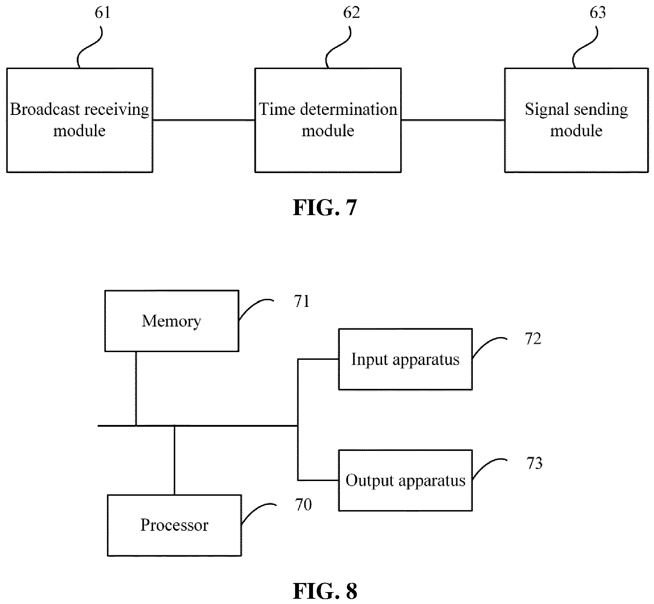

FIG. 7 is a structural diagram of another information transmission apparatus according to an embodiment of the present application. The information transmission apparatus may perform the information transmission method according to any embodiment of the present application and may specifically execute the corresponding functional modules and effects of the method. The apparatus may be implemented by software and/or hardware, is generally integrated in a client, and includes a broadcast receiving module 61, a time determination module 62 and a signal sending module 63.

The broadcast receiving module 61 is configured to acquire a synchronization broadcast signal from the receiving terminal, where the synchronization broadcast signal includes timestamp information and PUSCH time window position information.

The time determination module 62 is configured to determine sending time of a PUSCH signal according to the timestamp information and the PUSCH time window position information.

The signal sending module 63 is configured to send the PUSCH signal to the receiving terminal according to the sending time.

In the embodiment of the present application, the broadcast receiving module receives the synchronization broadcast signal carrying the timestamp information and the PUSCH time window position information, the time determination module determines the sending time of the PUSCH signal according to the timestamp information and the PUSCH time window position information, and the signal sending module sends the PUSCH signal according to the sending time, so that accurate uploading of PUSCH signal is achieved, the PUSCH signal sent by the client falls within the time window of the receiving terminal, the signal interference between different time windows is avoided, and the parsing efficiency of PUSCH signal is improved.

On the basis of the preceding embodiment of the present application, the apparatus further includes a detection signal module.

The detection signal module is configured to send the PRACH signal to the receiving terminal.

On the basis of the preceding embodiment of the present application, the timestamp information in the broadcast receiving module 61 is sending time of the synchronous broadcast signal.

On the basic of the preceding embodiment of the present application, the PUSCH time window position information in the broadcast receiving module 61 includes time window start time and time window duration time.

On the basis of the preceding embodiment of the present application, the PUSCH time window position information of the synchronous broadcast signal in the broadcast receiving module 61 includes position information of at least one PUSCH time window.

On the basic of the preceding embodiment of the present application, the time determination module 62 includes a delay determination unit, a range determination unit, and a sending time unit.

The delay determination unit is configured to acquire receiving time of the synchronization broadcast signal, and determine a difference value between the timestamp information and the receiving time as a transmission delay corresponding to the synchronization broadcast signal.

The range determination unit is configured to determine a time range is determine according to duration time of the PUSCH signal, the transmission delay, and the PUSCH time window position information.

The sending time unit is configured to select sending time of the PUSCH signal within the time range.

On the basic of preceding embodiment of the present application, the time range in the range determination unit is sending time of a start symbol in the PUSCH signal, a time window start time, a time window duration time, the transmission delay, and the duration time of the PUSCH signal.

On the basis of the above embodiment of the present application, the apparatus further includes an interval determination module.

The interval determination module is configured to determine a sending time interval between the PRACH signal and the PUSCH signal.

FIG. 8 is a structural diagram of a device according to an embodiment of the present application. As shown in FIG. 8, the device includes a processor 70, a memory 71, an input apparatus 72, and an output apparatus 73. One or more processors 70 may be provided in the device. One processor 70 is shown as an example in FIG. 8. The processor 70, the memory 71, the input apparatus 72, and the output apparatus 73 in the device may be connected via a bus or in other manners. The connection via a bus is shown as an example in FIG. 8.

As a computer-readable storage medium, the memory 71 may be configured to store software programs, computer-executable programs, and modules, such as modules (a signal broadcast module 51 and a signal receiving module 52; or a broadcast receiving module 61, a time determination module 62, and a signal sending module 63) corresponding to the information transmission apparatus in an embodiment of the present application. The processor 70 executes software programs, instructions, and modules stored in the memory 71 to perform function applications and data processing of the device, that is, to implement the preceding method.

The memory 71 may mainly include a program storage region and a data storage region. The program storage region may store an operating system and an application program required by at least one function. The data storage region may store data created depending on the use of a terminal. Additionally, the memory 71 may include a high-speed random-access memory and may also include a nonvolatile memory such as at least one disk memory, flash memory, or another nonvolatile solid-state memory. In some examples, the memory 71 may include memories which are remotely disposed relative to the processor 70, and these remote memories may be connected to the device via a network. Examples of the preceding network include, but are not limited to, the Internet, an intranet, a local area network, a mobile communication network, and a combination thereof.

The input apparatus 72 may be configured to receive inputted digital or character information and generate key signal input related to user settings and function control of the device. The output apparatus 73 may include display devices such as a display screen.

An embodiment of the present application further provides a computer-readable storage medium in which computer-executable instructions, when executed by a computer processor, are used for performing an information transmission method. The method includes the following.

A synchronization broadcast signal is sent to a client, where the synchronization broadcast signal includes timestamp information and PUSCH time window position information; and a PUSCH signal is received from the client according to the PUSCH time window position information. Optionally, a synchronization broadcast signal is acquired from a receiving terminal, where the synchronization broadcast signal includes timestamp information and PUSCH time window position information; a transmission delay is determined according to the timestamp information, and sending time of a PUSCH signal is determined according to the transmission delay and the PUSCH time window position information; and the PUSCH signal is sent to the receiving terminal according to the sending time.

In the storage medium including computer-executable instructions provided by embodiments of the present application, the computer-executable instructions implement not only the preceding method operations but also related operations in the information transmission method provided in any embodiment of the present application.

The term user terminal encompasses any appropriate type of wireless user device such as a mobile phone, a portable data processing apparatus, a portable web browser or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another calculation apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps with logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), and an optical memory device and system (a digital video disc (DVD) or a compact disk (CD)). Computer-readable media may include non-transitory storage media. The data processor may be of any type suitable for a local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. An information transmission method, applied to a receiving terminal, comprising:
sending a synchronization broadcast signal to a client, wherein the synchronization broadcast signal comprises timestamp information and physical uplink shared channel, PUSCH, time window position information; and
receiving, according to the PUSCH time window position information, a PUSCH signal from the client.

2. The method of claim 1, before receiving, according to the PUSCH time window position information, the PUSCH signal from the client, further comprising:
receiving a physical random access channel, PRACH, signal from the client.

3. The method of claim 2, wherein the timestamp information is sending time of the synchronous broadcast signal.

4. The method of claim 2, wherein the PUSCH time window position information comprises time window start time and time window duration time.

5. The method of claim 2, wherein the PUSCH time window position information in the synchronization broadcast signal comprises position information of at least one PUSCH time window.

6. An information transmission method, applied to a client, comprising:
acquiring a synchronization broadcast signal from a receiving terminal, wherein the synchronization broadcast signal comprises timestamp information and physical uplink shared channel, PUSCH, time window position information;
determining a transmission delay according to the timestamp information, and determining sending time of a PUSCH signal according to the transmission delay and the PUSCH time window position information; and
sending the PUSCH signal to the receiving terminal according to the sending time.

7. The method of claim 6, before sending the PUSCH signal to the receiving terminal according to the sending time, further comprising:
sending a physical random access channel, PRACH, signal to the receiving terminal.

8. The method of claim 7, wherein the timestamp information is sending time of the synchronous broadcast signal.

9. The method of claim 7, wherein the PUSCH time window position information comprises time window start time and time window duration time.

10. The method of claim 7, wherein the PUSCH time window position information in the synchronization broadcast signal comprises position information of at least one PUSCH time window.

11. The method of claim 7, wherein determining the transmission delay according to the timestamp information, and determining the sending time of the PUSCH signal according to the transmission delay and the PUSCH time window position information, comprises:
acquiring receiving time of the synchronization broadcast signal, and determining a difference value between the timestamp information and the receiving time as a transmission delay corresponding to the synchronization broadcast signal;
determining a time range according to duration time of the PUSCH signal, the transmission delay, and the PUSCH time window position information; and
selecting the sending time of the PUSCH signal within the time range.

12. The method of claim 11, wherein the time range is sending time of a start symbol in the PUSCH signal, time window start time in the PUSCH time window position information, time window duration time in the PUSCH time window position information, the transmission delay, and the duration time of the PUSCH signal.

13. The method of claim 7, before sending the PRACH signal to the receiving terminal, further comprising:
determining a sending time interval between the PRACH signal and the PUSCH signal.

14. An information transmission apparatus, applied to a receiving terminal, comprising:
a signal broadcast module, which is configured to send a synchronization broadcast signal to a client, wherein the synchronization broadcast signal comprises timestamp information and physical uplink shared channel, PUSCH, time window position information; and
a signal receiving module, which is configured to receive, according to the PUSCH time window position information, a PUSCH signal from the client.

15. An information transmission apparatus, applied to a client, comprising:
a broadcast receiving module, which is configured to acquire a synchronization broadcast signal from a receiving terminal, wherein the synchronization broadcast signal comprises timestamp information and physical uplink shared channel, PUSCH, time window position information;
a time determination module, which is configured to determine a transmission delay according to the timestamp information, and determine sending time of a PUSCH signal according to the transmission delay and the PUSCH time window position information; and
a signal sending module, which is configured to send the PUSCH signal to the receiving terminal according to the sending time.

16. A device, comprising:
at least one processor; and
a memory configured to store at least one program,
wherein when executed by the at least one processor, the at least one program causes the at least one processor to perform the information transmission method of any one of claims 1 to 5 or claims 6 to 13.

17. A computer-readable storage medium, which is configured to store a computer program which, when executed by a processor, implements the information transmission method of any one of claims 1 to 5 or claims 6 to 13.
